(19) Europäisches Patentamt
European Patent Office
Office européen des brevets

(11) **EP 2 432 626 B1**

(12) **EUROPEAN PATENT SPECIFICATION**

(45) Date of publication and mention
of the grant of the patent:
**04.12.2013 Bulletin 2013/49**

(51) Int Cl.:
**B25J 17/02** (2006.01)

(21) Application number: **10736820.1**

(22) Date of filing: **19.05.2010**

(86) International application number:
**PCT/IT2010/000224**

(87) International publication number:
**WO 2010/134119 (25.11.2010 Gazette 2010/47)**

(54) **CLOSED-CHAIN ROTATIONAL MECHANISM HAVING DECOUPLED AND HOMOKINETIC ACTUATION**

DREHMECHANISMUS MIT GESCHLOSSENER KETTE SOWIE ENTKOPPELTER UND HOMOKINETISCHER BEWEGUNG

MÉCANISME DE ROTATION À CHAÎNE FERMÉE AYANT UNE COMMANDE HOMOCINÉTIQUE ET DÉCOUPLÉE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **19.05.2009 IT RM20090250**

(43) Date of publication of application:
**28.03.2012 Bulletin 2012/13**

(73) Proprietor: **Alma Mater Studiorum -Universita' di Bologna**
**40126 Bologna (IT)**

(72) Inventors:
• **CARRICATO, Marco**
**I-40126 Bologna (IT)**
• **CONCONI, Michele**
**I-40126 Bologna (IT)**

(74) Representative: **Perronace, Andrea et al**
**Barzano & Zanardo Roma S.p.A.**
**Via Piemonte 26**
**00187 Roma (IT)**

(56) References cited:
• **Marco Carricato: "Homokinetic transmission of rotational motion via constant-velocity joints in closed-chain wrists" Proceedings of the 12th IFToMM World Congress, Besançon, France, [Online] 21 June 2007 (2007-06-21), XP002565792 Retrieved from the Internet: URL:http://130.15.85.212/proceedings/proce edings_WorldCongress/WorldCongress07/artic les/sessions/papers/A437.pdf> [retrieved on 2010-01-28] cited in the application**
• **GOGU G ED - RYUICHI UEDA ET AL: "Fully-isotropic Three-degree-of-freedom Parallel Wrists" 2007 IEEE INTERNATIONAL CONFERENCE ON ROBOTICS AND AUTOMATION - 10-14 APRIL 2007 - ROMA, ITALY, IEEE, PISCATAWAY, NJ, USA, 10 April 2007 (2007-04-10), pages 895-900, XP031334244 ISBN: 978-1-4244-0601-2 cited in the application**

## Description

This invention relates to closed-chain rotational mechanisms having decoupled and homokinetic actuation.

More precisely, the invention concerns the possibility to actuate a body in a decoupled and homokinetic way by frame-located motors via holonomic transmissions based on constant-velocity (CV) couplings. Decoupled and configuration-independent relations between the motor rates and the time-derivatives of the variables describing the end-effector orientation are proven to be feasible. The functioning of CV couplings is originally investigated and the conditions applying for homokinetic transmission to be preserved during simultaneous motor drive are revealed and implemented. Consequently the invention concerns the development of novel two- and three-dof closed-chain orientational manipulators, characterized by constant input-output relations and suitable workspaces. The results are valuable for the type and dimension synthesis of closed-chain wrists free from direct kinematic singularities, and characterized by simple kinematics and regular input-output kinetostatic relations.

Closed-chain mechanisms, particularly parallel ones, are reputed to exhibit favorable characteristics with respect to their serial counterparts, mainly due to the possibility of:

i) distributing the load acting on the output member to a number of kinematic chains branching from the frame;
*ii*) reducing the inertia of the moving parts by locating the motors on or close to the fixed frame.

Resulting potential advantages are a larger payload to robot weight ratio, a greater stiffness and higher dynamic performances. Common drawbacks are a lower dexterity, a smaller workspace, more involved kinematic relations, and more serious consequences caused by singular configurations. While both open- and closed-chain devices suffer inverse kinematic singularities, which are naturally associated with the local loss of dexterity of the output link, only closed-chain devices undergo direct ones. These are particularly troublesome for they disrupt the kinetostatic transmission of forces and velocities, leading the mechanism to become locally uncontrollable (Gosselin and Angeles 1990).

Simplification of the kinematic design may play a major role to overcome such disadvantages, via

- the synthesis of closed-chain mechanisms whose output links, according to the required tasks, generate specified motion patterns necessitating less than six degrees of freedom (dofs);
- the partial or complete decoupling of motion actuation, i.e. the correlation of each output dof to as few input parameters as possible (preferably just one);
- the attainment of possibly invariant kinetostatic relationships governing the transmission of forces and velocities from the actuators to the output member, throughout the workspace.

The achievement of such objectives potentially results in easier mathematical treatments, simpler control and better real-time performances, enhanced kinetostatic operation and limited singularity problems, wider workspaces and a more direct correlation between actuator motion ranges and workspace dimensions.

Such an approach has been successfully applied to certain classes of parallel machines. Indeed, special families of mechanisms for translational movement (Carricato and Parenti-Castelli 2002; Kong and Gosselin 2002) and Schoenflies motion (Kong and Gosselin 2004*a*; Carricato 2005) (a rigid body is said to have Schoenflies motion if it can freely translate in space and rotate about a constant direction) have been identified that exhibit *decoupled* and *homokinetic* input-output velocity relations throughout the workspace. As a consequence, the motion results fully decoupled (each actuator, attached to the frame, directly control one dof of the end-effector), the Jacobian matrices are constant, the kinematic analysis is straightforward and no computation is required for real-time control. In many instances, such mechanisms are also singularity-free, their input-output kinetostatic behavior being isotropic throughout the workspace.

The realization of the suggested targets becomes more complex when the output link must possess more than one rotational freedom. In this case, only partial results have been obtained, restricted to two-dof mechanisms whose end-effector is limited to rotate about a pair of concurrent axes. Carricato and Parenti-Castelli (2004), Gogu (2005), Hervé (2006) and Vertechy and Parenti-Castelli (2006) presented various devices of this kind. In these mechanisms the dofs are decoupled, since each motor independently actuates one of the Euler angles describing the orientation of the output link. However, input-output kinematic relationships are not constant, with the meaningful exception of the solution proposed by Gogu (2005), which is, nevertheless, not singularity-free. To the author's knowledge, the problem of the decoupled and homokinetic transmission of motion to a freely rotating body has not yet been tackled in its general form.

The invention originally treats the transmission of rotational movement with constant speed ratio from fixed-base-mounted actuators to a closed-chain robotic wrist with two- or three-dof orientational mechanism. In what follows it will be shown, on the one hand, the theoretical impossibility of attaining decoupled and homokinetic relationships between the motor rates and the components of the end-effector angular velocity in holonomic wrists; on the other hand, it will be illustrated the conceptual feasibility and the practical interest in generating relations of this type between the motor rates and the time-derivatives of the generalized coordinates describing the end-effector orientation. The design of closed-chain wrists implementing the latter relationships will be accordingly described.

This aim is achieved via the use of so-called constant-velocity (CV) couplings, also referred to as homokinetic joints. CV couplings connecting intersecting shafts have been widely studied in the past and their use in automotive and industrial driveshafts is common practice (Duditã 1974; Zagatti 1983; Matschinsky 2000; Seherr-Thoss et al. 2006). In robotics, CV-joint-based kinematic chains have been occasionally used as in-parallel connections between the base and the moving platform in a number of mixed-motion two- and three-dof parallel manipulators (Dunlop and Jones 1997; Tischler et al. 1998; Sone et al. 2004; Zlatanov and Gosselin 2004). However, seldom attempts have been made to exploit CV couplings' intrinsic kinematic properties as means to achieve homokinetic input-output relations in multi-dof mechanisms. Basic ideas in this perspective may be found in the design of some robotic wrists, such as those described by Rosheim (1989, pp. 115-118) and Milenkovic (1990), but the problems associated with the preservation of the homokinetic properties of the transmission during simultaneous motor action have not been addressed. Gogu (2006, 2007), indeed, focuses on this task, by remotely actuating the revolute pairs of a serial spherical chain via CV-joint-based transmissions. Its solutions, however, prove ineffective. This depends on the fact that, notwithstanding the implications of their somewhat misleading name, CV couplings do not guarantee, in general, equal velocities between the members they join, unless some conditions are satisfied. This issue, though implicitly recognized by the automotive literature dedicated to vehicle transmissions and suspensions (Matschinsky 2000), has been seldom explicitly studied (an exception may be found in Porat (1980)) and it is neither addressed nor referred to by the treatises specialized on the subject (cf. Duditã 1974; Zagatti 1983; Seherr-Thoss et al. 2006). This may produce misunderstandings about the functioning of CV couplings and it may lead to incorrect applications in which they do not work as expected. This topic will be deeply analyzed, revealing the necessary and sufficient conditions for the preservation of homokinetic transmission in condition of general motion.

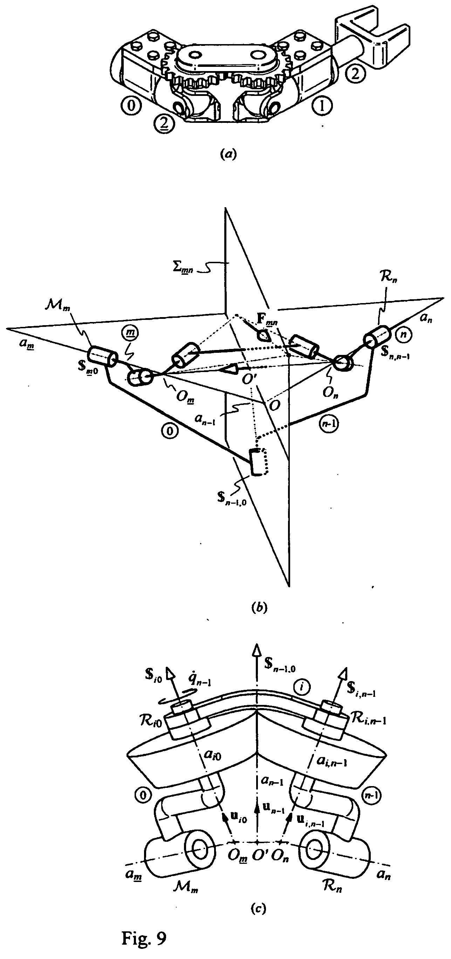

A first approach to the problem may be found in Carricato (2007). Anyway, the conclusion of this work are incomplete. The diagram proposed in figure 9 (not reported here) shows, indeed, the geometric relations leading to a wrist with a not-fully-decoupled actuation. Furthermore, no mechanism is proposed implementing this concept.

The object of this invention is to realize the decoupled and homokinetic transmission of a rotational motion between two or three fixed axes motors and the end-effector of a robotic wrist (or a rotational mechanism), in order to overcome the drawback and to solve the problem of the previous solutions.

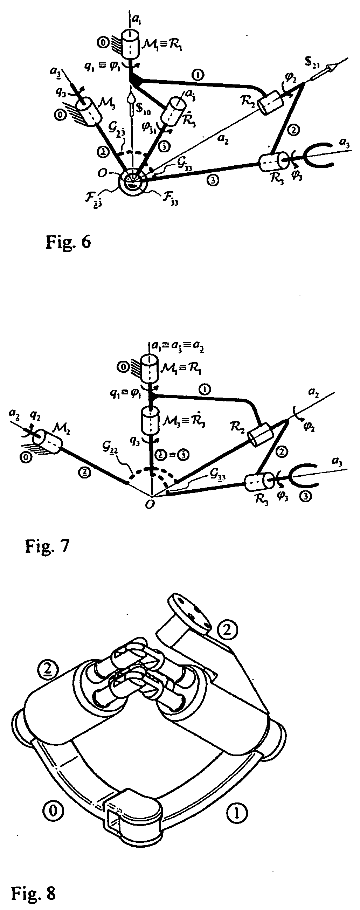

The subject-matter of this invention is a closed-chain rotational mechanism having decoupled and homokinetic actuation of the motion of a body that rotates in space with three degrees of freedom around a fixed point $O$, the rotational mechanism comprising (cf. figure 7) a frame 0 and:

- a rotational motor $M_1$, whose rotor has an axis $a_1$ fixed to the frame 0; such a motor actuates a revolute pair $R_1$ and controls the rotational motion of a member 1 around an axis $a_1 \equiv \underline{a_1}$;
- a rotational motor $M_2$, whose rotor has an axis $\underline{a_2}$ fixed to the frame 0; such a motor generates the rotational motion of a member $\underline{2}$ around the axis $\underline{a_2}$ and, by means of a connecting chain interposed between the member $\underline{2}$ and a member 2, actuates a revolute pair $R_2$ of axis $a_2$, therefore controlling the rotational motion of the member 2 around the axis $a_2$;
- a rotational motor $M_3$, whose rotor has an axis $\underline{a_3}$ fixed to the frame 0; such a motor generates the rotational motion of a member $\underline{3}$ around the axis $\underline{a_3}$ and, by means of a suitable connecting chain interposed between the member $\underline{3}$ and a member 3, actuates a revolute pair $R_3$ of axis $a_3$, controlling in such a way the rotational motion of the member 3 around the axis $a_3$;
- a rigid connection between said revolute pairs $R_1$ and $R_2$ constituting the member 1;
- a rigid connection between said revolute pairs $R_2$ and $R_3$ constituting the member 2;

and being such that:

- the axis of the motors $M_1$, $M_2$ and $M_3$, and the axis of the revolute pairs $R_1$, $R_2$ and $R_3$ are all concurrent in the same fixed point $O$;
- there are connecting chains $G_{\underline{22}}$ and $G_{\underline{33}}$, each having connectivity equal to five, for the motion transmission respectively between the members $\underline{2}$ and 2 and the members $\underline{3}$ and 3, and placed around the fixed point $O$ so as to avoid any mutual mechanical interference, and such that the kinematic pairs implementing the kinematic screws $\$^j_{\underline{mn}}$ ($j$ = 1,2,3,4,5) of $G_{\underline{mn}}$, with $\underline{mn} = \underline{22}$ and $\underline{33}$, fulfil the condition of bilateral symmetry with respect to $\underline{\Sigma}_{\underline{mn}}$, with $\underline{mn} = \underline{22}$ and $\underline{33}$, where $\underline{\Sigma}mn$ is the bisecting plane of the chain $G_{\underline{mn}}$, i.e. the plane with respect to which the axis $\underline{a_m}$, with m = 2 and $\underline{3}$, and $a_n$, with $n$ = 2 and 3, are bilaterally symmetrical;
- the motor $M_3$ is mounted coaxially to motor $M_1$, i.e. the axis $\underline{a_3}$ coincides with the axis $a_1$, and $a_1$, with the stator of the motor $M_3$ being mounted on the member 1;
- the angle between the axis $a_1$ and $\underline{a_2}$, the angle between the axis $a_1$ and $a_2$, and the angle between the axis $a_2$ and $a_3$ have all an identical value.

Preferably according to the invention, connecting chains G$_{22}$ and G$_{33}$ are *RER* or *RSR* chains, even different with respect to each other, where *R* is a revolute pair, *S* a spherical pair or a set of a kinematic joints equivalent to it and *E* is a planar joint or a set of a kinematic joints equivalent to it.

Preferably according to the invention, a *CRC* chain is used, this being a particular case of the *RER* chain and wherein the cylindrical pairs C are parallel to the axes $a_m$ and $a_n$, with (m, *n*) = (2, 2) or (3, 3), and the revolute pair R is perpendicular to them.

Preferably according to the invention, a chain *UPU* is used, this being a particular case of chain *RER* and wherein the most external axes of the universal pairs *U* are bilaterally symmetrical with respect to $\Sigma_{mn}$, the most internal axes are parallel to $\Sigma_{mn}$, and the intermediate prismatic pair P is perpendicular to the internal axes of the universal pairs.

Preferably according to the invention:

- the connecting chain 2 -2 is constituted by a Clemens joint, this being a particular case of the chain *RSR*;
- the connecting chain 3-3 is constituted by a double Cardan joint, this being a particular case of the chain *UPU*.

The invention will be now described by way of illustration but not by way of limitation, with particular reference to the figures of the enclosed  drawings, wherein:

- figure 1 shows two general architectures of closed-chain wrists actuated trough frame mounted actuators;
- figure 2 shows an homokinetic (CV) joint for intersecting shafts;
- figure 3 shows shafts connected through a CV joint, the relative position of those shafts being varied via a spherical connecting chain composed by three rotoidal pairs;
- figure 4 shows a generic connecting chain of a CV joint for intersecting shafts;
- figure 5 shows the decoupled and homokinetic actuation of a two dof wrist by means of a transmission employing a CV joint;
- figure 6 shows the scheme for the remote homokinetic actuation of the third rotoidal pair in a 3 dof wrist;
- figure 7 shows the homokinetic and decoupled actuation of a closed-chain 3 dof wrist through transmission built with CV joints, according to the invention;
- figure 8 shows a decoupled and homokinetic 2 dof wrist with a self-supporting Koenigs joint, according to the invention;
- figure 9 shows a decoupled and homokinetic 2 dof wrist with a *UU* connecting chain and a centering system: (a) represents the wrist model, according to the invention; (b) represents the system of constraints imposed by the *UU* chain; (c) represents the centering system, according to the invention;
- figure 10 shows a decoupled and homokinetic 3 dof wrist with Clemens and Hooke connecting chains, according to the invention.

According to the previous results, novel architectures of decoupled and homokinetic two- and three-dof wrists using CV-joint-based transmissions are presented. As CV couplings are commercially available components, the described solutions, particularly those concerning two-dof manipulators, may prove remarkably simple and effective, with regular input-output kinetostatic relations being associated with adequately ample workspaces. Off-the-shelf CV couplings may also be replaced by equivalent open-chain linkages (called *connecting chains* by Hunt (1973, 1978)), providing a wide variety of conceptual and practical possibilities. This may be particularly useful in the design of three-dof wrists, in order to overcome interference problems arising when extra transmission chains need to be added to actuate the third freedom of the output member. Exemplifying models of singularity-free two- and three-dof wrists with  decoupled and homokinetic actuation are provided to illustrate the feasibility of the proposed designs.

As for the nomenclature, the following symbols are used throughout the paper to designate kinematic pairs: *H* for helical, P for prismatic, *R* for revolute, C for cylindrical, *U* for universal, *E* for planar and *S* for spherical joint, whereas the term Hooke joint designates the double Cardan coupling (Seherr-Thoss et al. 2006, p. 8-9). An underline denotes a member connected to an actuator, as well as quantities referring to it. The locution '*j*-system of screws' is used to designate a j-dimensional vector subspace of screws.

Formulation of the problem

Let a *n*-dof mechanism ($1 \leq n \leq 6$) be considered, *A* being the fixed base, *B* the end-effector, t the twist of *B* with respect to *A,* $\omega$ the angular velocity of *B* relative to *A* and **w** the wrench generated by the actuators on *B*. If *B* has *n* specific and predetermined mobility freedoms, i.e. 6-*n* elements of *t* are constantly equal to zero, 6-*n* elements of **w** do not require motor actions to be balanced, for they are directly equilibrated by joint reactions. Such elements may be discarded and attention may be paid to the relevant components of *t* and *w* only (namely, $\hat{t}$ and $\hat{w}$).

If **q** and **f** are the arrays containing the motor displacement variables and generalized forces, respectively, the mechanism kinematic constraints, assumed to be holonomic (if all constraints are holonomic, the position of the end-effector is solely determined by the displacements generated by the motors), may be expressed as

$$(1) \qquad \dot{\mathbf{q}} = \mathbf{J}_{inv}^{-1}\mathbf{J}_{dir}\hat{\mathbf{t}},$$

with $\mathbf{J}_{dir}$ and $\mathbf{J}_{inv}$ being nxn configuration-dependent matrices known as Jacobians of the direct and inverse kinematics, respectively.

If friction as well as link weights and inertias are disregarded, the principle of virtual work yields

$$(2) \qquad \mathbf{f} = \left(\mathbf{J}_{dir}^{-1}\mathbf{J}_{inv}\right)^{\mathbf{T}}\hat{\mathbf{w}}.$$

Equations (1) and (2) provide the velocities and the forces that the motors must generate in order to produce assigned twists and wrenches on the output member. The same equations prove that the more $\mathbf{J}_{inv}$ and $\mathbf{J}_{dir}$ are close to being singular, the greater such velocities and forces must respectively be. In particular, there is no finite value of $\dot{\mathbf{q}}$ that allows an arbitrary twist to be obtained at an inverse singularity (the output link loses at least one of its admitted freedoms) and there is no finite value of $\mathbf{f}$ that allows an arbitrary wrench to be produced at a direct singularity (certain dofs become uncontrollable) (Gosselin and Angeles 1990).

However, if $\mathbf{J}_{inv}$ and $\mathbf{J}_{dir}$ are *diagonal* and *constant* matrices, Eqs. (1) and (2) may be respectively written as

$$(3) \qquad \left[\dot{\mathbf{q}}\right]_i = k_i^{-1}\left[\hat{\mathbf{t}}\right]_i$$

$$(4) \qquad \left[\mathbf{f}\right]_i = k_i\left[\hat{\mathbf{w}}\right]_i$$

where $k_i$ is a nonzero constant ($i$= 1...$n$). Hence, in this case

- motion is completely decoupled;
- all forces and velocities produced by the actuators are always available on the end-effector with no distortional effect induced by the mechanical transmission, which is indeed homokinetic.

Relationships such as those in Eq. (3) and (4) may be attained also if the diagonal matrices $\mathbf{J}_{inv}$ and $\mathbf{J}_{dir}$ are *proportional* rather than constant. In this case, however, motion transmission, though still generally homokinetic, is no longer globally uniform, since the elements of $\mathbf{J}_{inv}$ and $\mathbf{J}_{dir}$, though preserving a constant ratio, may vary during movement, thus causing the way forces and velocities are transmitted to change. In static terms, it could be said that, while the actions produced by the actuators are available unaltered on the end-effector, the forces that transmit these actions inside the mechanism undergo scaling effects, possibly reaching unbearable values close to configurations in which the elements of $\mathbf{J}_{inv}$ and $\mathbf{J}_{dir}$ simultaneously approach zero (resulting in an *uncertainty* configuration (Hunt, 1978) or in an *increased instantaneous mobility* (Zlatanov, Fenton and Benhabib, 1995)).

Some manipulators presented in the literature for translational and Schoenflies-motion reveal kinetostatic relationships such as those in Eq.(3)-(4) and exhibit the remarkable characteristics associated with them (Carricato and Parenti-Castelli 2002; Kong and Gosselin 2002, 2003; Carricato 2005).

It appears natural to search for analogous accomplishments for mechanisms whose output member possesses more complex rotational movements. Anyway, it is readily seen that decoupled and homokinetic relations between the motor velocities and the components of the angular velocity of *B* relative to A (in a coordinate system indifferently attached to either *B* or *A*) are unattainable as long as *B* rotates about more than one direction and only holonomic joints are adopted. Indeed, provided that at least two components of $\omega$ are nonzero and independent, and letting $\mathbf{q}^r$ be the array containing the motor displacement variables responsible for the output rotations, if

$$(5) \qquad \dot{\mathbf{q}}^r = \mathbf{K}\omega,$$

with K being a constant diagonal matrix, it may be immediately verified that the kinematic bond between A and $B$ cannot be holonomic. In fact, if $\varphi$ is the array containing any three suitable parameters describing the orientation of $B$ with respect to A, a matrix $\mathbf{A}(\varphi)$ exists so that (Wittenburg 1977)

$$(6) \qquad \boldsymbol{\omega} = \mathbf{A}(\boldsymbol{\varphi}) \cdot \dot{\boldsymbol{\varphi}},$$

and hence, after inserting Eq. () in Eq. (6), one has:

$$(7) \qquad d\mathbf{q}^r = \mathbf{K} \cdot \mathbf{A}(\boldsymbol{\varphi}) \cdot d\dot{\boldsymbol{\varphi}}.$$

A well known kinematic result assures that the differential form in Eq. () is integrable if and only if $B$ rotates about a constant direction (Wittenburg 1977). As a direct consequence, the kinematic relationship (5) cannot be realized if $B$ has at least two rotational freedoms with respect to $A$ and a holonomic bond exists between them. Of course, the above arguments do not preclude the possibility of accomplishing a nonholonomic coupling between $A$ and $B$ so that Eq. (5) may be fulfilled. The Atlas motion simulator, for instance, uses a transmission based on omni-directional wheels to generate a constant relationship between $\dot{q}^r$ and $\omega$ (Robinson et al. 2005). The inescapable consequence drawn in by nonholonomic constraints, however, is that any relationship between motor displacements and the output body posture is lost (with the latter being worked out only if the whole time-history of motion is known).

If a relationship such as that in Eq. (5) is impossible to achieve via holonomic constraints, a viable alternative appears to be the search for decoupled and constant relations between the velocities $\dot{q}_i^r$ and the time-derivatives of the generalized coordinates describing $B$'s orientation, to wit

$$(8) \qquad \dot{\mathbf{q}}^r = \mathbf{K}\dot{\boldsymbol{\varphi}}.$$

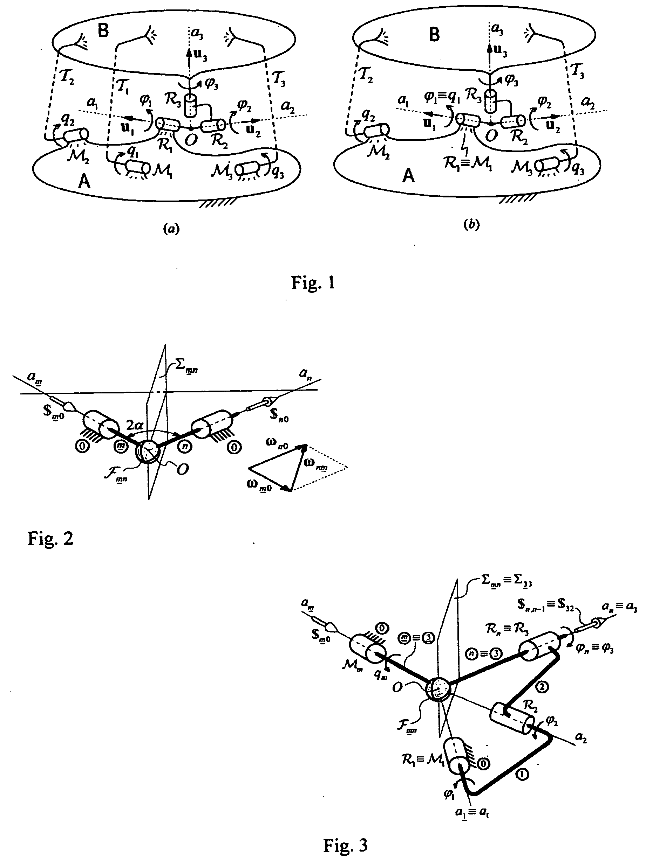

An immediate physical interpretation justifying the practical interest of such a choice results when Euler-type orientation angles (e.g. Euler or Cardan angles) are chosen. In fact, angles of this sort represent successive rotations about the axes of three virtual revolute pairs $R_i$ ($i$=1,2,3) arranged in series and concurrent in the same point (Standard Euler-type angles represent sequential body rotations about the axes of an orthogonal frame. However, the orthogonality condition is not essential and it will not be imposed here, thus the angle between the axes of the pairs $R_i$ being left generic.), such as those of the spherical chain  shown in solid lines in Fig. 1$a$, which thus provides an appropriate embodiment. The time-derivatives $\dot{\varphi}_i$ are the (not necessarily orthogonal) components of $\omega$ along such axes and they obviously coincide with the relative velocities between the members connected by the joints $R_i$, namely

$$(9) \qquad \boldsymbol{\omega} = \dot{\varphi}_1 \mathbf{u}_1 + \dot{\varphi}_2 \mathbf{u}_2 + \dot{\varphi}_3 \mathbf{u}_3,$$

where $\mathbf{u}_i$ is a unit vector along the axis $a_i$ of $R_i$ (with $\dot{\varphi}_3$ being identically nought when $B$ has only two rotational freedoms).

In this perspective, the problem reduces to pursuing a way to remotely actuate via decoupled and homokinetic relations the revolute joints of the serial wrist embodying the *virtual chain* corresponding to the rotational motion of $B$ relative to A (a virtual chain is defined by Kong and Gosselin (2005) as the simplest serial chain able to realize a given pattern of motion).

For the sake of simplicity, it is here considered only the case in which $B$ has a purely rotational motion about a fixed point $O$ is considered (so that $\mathbf{q}=\mathbf{q}^r$), according to the general schematic portrayed in Fig. 1$a$, in which three transmission chains $T_i$ (indeterminately represented by dashed lines) are driven by base-located rotary actuators $M_i$ and must transmit motion, in a homokinetic way, to the revolute pairs of the passive spherical chain $R_1 R_2 R_3$, which constrains $B$ to A. Indeed, as $R_1$ may be directly actuated by $M_1$, the true problem consists in designing $T_2$ and $T_3$ (Fig. 1$b$).

It is important to emphasize a fundamental difference between the design proposed here and the ones available for translational and Schoenflies mechanisms. The latter exhibit decoupled and homokinetic relations between the actuator velocities and the output-twist components, which excludes both direct and inverse singularities. The wrist design proposed here, instead, since such a result is impossible to achieve for orientational mechanisms, searches for a way to realize decoupled homokinetic transmissions between base-mounted motors and the joints of a serial wrist, namely *it aims to convert the kinematics of a closed-chain rotational device into that of a serial spherical chain.* Consequently, while such a solution achieves the result of potentially ruling out direct singularities, it has no effect on the less problematic inverse ones inherent to the serial chain. Of course, such singularities coincide with those of the matrix A $(\varphi)$ transforming between $\dot{\varphi}$ and $\omega$ (cf. Eq. (6)) and occur (for a 3-dof wrist) when the axes of the pairs $R_i$ are coplanar.

Indeed, most of the industrial wrists used in practice are designed according to the scheme illustrated in Fig. 1*b*, with motion being transmitted from remotely-located motors to the joints of the wrist equivalent open-loop chain by means of complex epicyclical gear trains (Rosheim 1989). However, transmission is therein generally coupled, though via linear echelon-form relations of type (Tsai 1988)

$$(10) \qquad \dot{\varphi}_1 = \dot{\varphi}_1\left(\dot{q}_1\right), \ \dot{\varphi}_2 = \dot{\varphi}_2\left(\dot{q}_1, \dot{q}_2\right), \ \dot{\varphi}_3 = \dot{\varphi}_3\left(\dot{q}_1, \dot{q}_2, \dot{q}_3\right).$$

In orientational manipulators with parallel architecture, coupling is much stronger (cf., for instance, Innocenti and Parenti-Castelli 1993; Gosselin and St-Pierre 1997; Vischer and Clavel 2000; Kong and Gosselin 2004*b*).

Perfectly decoupled and homokinetic wrists may likely offer some benefits. Moreover, most of the CV-joint-based transmissions presented in this paper may be realized by way of linkages, which may possibly improve, with respect to their geared counterparts, wrist performances in terms of noise, vibrations and backlash.

Finally, it may be observed that, in order to realize a 6 dof spatial movement of *B* including translational displacements, it is always possible to mount an orientational device such as that in Fig. 1*b* on the translating platform of a translational parallel mechanism (Carricato and Parenti-Castelli 2004b), with the turning motion to the pairs $M_i$, now unactuated, being transmitted from base-located motors by means of independent constant-speed-ratio couplings for parallel shafts (Hunt 1973).

The homokinetic transmission of rotational motion via constant-velocity couplings

*The general theory of constant-velocity (CV) couplings*

Hunt (1973, 1978) describes a general CV coupling $F_{mn}$, as a joint which allows two shafts $\underline{m}$ and n to be placed anywhere relative to one another and which ensures, for all relative shaft *locations,* that at every instant $|\omega_{n0}|=|\omega_{\underline{m}0}|$, $\omega_{n0}$ and $\omega_{\underline{m}0}$ being the angular velocities of the shafts relative to the same reference frame. He shows that, in order to comply with these requirements other than transitorily, the axes of the shafts must intersect (Fig. 2), with the joint connectivity being two or three depending on whether the coupling accommodates only the variation of the shaft relative angularity or also the shift of the intersection point (plunging freedom). The transmission of motion between non-intersecting shaft may be obtained with a third one, connected to the others by two of the previous described joints.

The essential argument underlying any theory explaining homokinetic transmission between intersecting shafts consists in that, if $|\omega_{n0}| = |\omega_{\underline{m}0}|$, then the relative velocity $\omega_{n\underline{m}} = \omega_{n0}-\omega_{\underline{m}0}$ must be parallel to the bisecting plane $\Sigma_{\underline{mn}}$, which is the plane with respect to which the shaft axes $a_{\underline{m}}$ and $a_n$ are bilaterally symmetric, i.e. the plane containing their common normal and angle bisector. This is what any CV coupling indeed accomplishes: it constrains the twist \$$_{n\underline{m}}$ = \$$_{n0}$-\$$_{\underline{m}0}$ of the shaft relative motion to precisely lie on $\Sigma_{\underline{mn}}$. More specifically, a general plunging joint constrains \$$_{n\underline{m}}$ to belong to a fourth special three-system comprising all screws of zero pitch lying on $\Sigma_{\underline{mn}}$ as well as the infinite-pitch screws perpendicular to it, whereas a general non-plunging joint constrains \$$_{n\underline{m}}$ to belong to a first special two-system constituting a subset of the above one, namely the one containing the planar pencil of screws through the axes' intersection point $O$ (Hunt 1973, 1978).

Since a special three-system of the fourth kind and zero finite pitch is self-reciprocal, the constraint wrenches exerted by the CV coupling must produce a planar field of forces lying on $\Sigma_{\underline{mn}}$. This system may be physically implemented by laying between the shafts to be coupled a minimum of three in-parallel connectivity-five *connecting chains,* each one providing a constraint force situated on $\Sigma_{\underline{mn}}$. Hunt (1973, 1978) provides an exhaustive list of all open-chain linkages that do so for full-cycle movement of the joint (cf. Table 1 in the first reference and the corresponding rectifying remarks on page 397 of the second one). A CV coupling realized in this way is *self-supporting,* for it needs no additional positional constraint to maintain the shafts in the intersecting configuration. If the centering restraint is provided by extra means, typically a ball-and-socket joint centered in $O$, a single connecting chain is sufficient, provided that its constraint force does not pass through $O$ (the spherical pair already supplies a bundle of forces through this point). In this case, the constraint wrenches generate, as a whole, a first special four-system and a non-plunging coupling results.

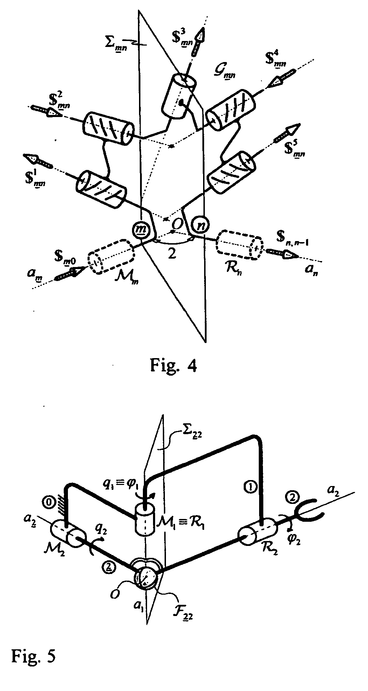

The most general connecting chain $G_{mn}$, from which all others derive as particular cases, is shown in Fig. 4 (Hunt 1973, 1978). Bilateral symmetry about $\Sigma_{\underline{mn}}$ is the fundamental condition that the constituting screws of $G_{mn}$ must fulfill. In particular, \$$_{\underline{mn}}^{j}$ and \$$_{\underline{mn}}^{6-j}$ (*j*=1,2) must have opposite pitches of equal magnitude, whereas \$$_{\underline{mn}}^{3}$ must have

zero pitch and lie on $\Sigma_{\underline{mn}}$ at a finite or infinite distance from the others (in the latter case, $\mathbf{\$}^3_{\underline{mn}}$ is equivalent to an infinite-pitch screw perpendicular to $\Sigma_{\underline{mn}}$).

Practically, a screw of pitch $h$ can be realized by a helicoidal joint of the same pitch, a zero-pitch screw by a revolute joint and an infinite-pitch screw by a prismatic joint. Any system of prismatic joints parallel to a plane and revolute joints perpendicular to it (having three dof) is equivalent to a planar joint. Any system of revolute joints with axes converging in a common point (having three dof) is equivalent to a spherical joint. Two revolute joints with axes converging in a common point is equivalent to a universal joint.

For evident practical reasons, the connecting chains exhibiting only zero- or infinite-pitch screws assume special relevance, particularly those which are obtained by letting $\mathbf{\$}^1_{\underline{mn}}$ and $\mathbf{\$}^5_{\underline{mn}}$ be revolute pairs symmetrically disposed about $\Sigma_{\underline{mn}}$ and by arranging $\mathbf{\$}^2_{\underline{mn}},$ $\mathbf{\$}^3_{\underline{mn}}$ and $\mathbf{\$}^4_{\underline{mn}}$ so as to form either an $E$-equivalent joint whose normal is parallel to $\Sigma_{\underline{mn}}$ or an $S$-equivalent joint centered in $\Sigma_{\underline{mn}}$. The two families are here referred to as $RER$ and $RSR,$ respectively. Some particular cases exist. The $RER$ chain results in a $CRC$ when the $C$ pairs are parallel to the axes of the shafts and the $R$ joint is perpendicular to them. The $RER$ chain results in a $UPU$ when the most external axes of the universal joints are bilaterally symmetric respect to $\Sigma_{\underline{mn}}$ while the most internal are parallel to the same plane, the intermediate prismatic joint being perpendicular to the latter axes. If, in either the $RER$ chain or the $RSR$ chain, $\mathbf{\$}^3_{\underline{mn}}$ is suppressed and the axes of the remaining screws, on each side of $\Sigma_{\underline{mn}}$, are set to converge in a point of the respective shaft axis, a particular connectivity-four chain of type $UU$ is obtained (cfr last section before conclusion, Fig. 9).

*The shortfall of homokinetic transmission in condition of general motion*

As said in the introduction, CV couplings do not guarantee, in general, equal velocities between the members they join, unless some conditions are satisfied. Indeed, the arguments exposed in the preceding section take it for granted that parallelism exists between the shaft axes and the direction of the respective angular velocities relative to the frame (Fig. 2). This implies assuming that *the shaft axes do not change their relative posture during homokinetic transmission* (though the relative angularity may be arbitrary). Thus, a CV coupling must allow for varying the relative location of the shaft axes, but uniform speed drive is intended to be transmitted only once such a location is assigned. If this posture changes in an arbitrary way (cfr. Porat, 1980): i) a new formal definition of 'homokinetic transmission' needs to be given, since the shafts $\underline{m}$ *and* $n$ now have different connectivities with respect to the frame; *ii)* whatever definition is chosen (three examples are given in the following), transmission may *no longer be generally regarded as homokinetic.*

In Fig. 3 the relative orientation between the shaft axes ($\underline{m} = \underline{3}$, n=3) is varied by way of two concurrent revolute joints arranged in series with the bearing hub of the shaft $n$ (chain $R_1R_2R_3$). In order for a transmission ratio between $\underline{m}$ and n to be defined, a unique scalar quantity associated with the angular velocity of n must be chosen to be compared with the speed of $M_m$. This choice is not unique. Natural candidates (someway related to the original definition of transmission ratio between $\underline{m}$ and n) may be: i) the magnitude $|\omega_{n,n-1}|$ of the relative velocity between n and its bearing hub (namely, the angular rate of the joint $R_n$); ii) the projection of $\omega_{n0}$ on $a_n$; iii) the magnitude $|\omega_{n0}|$ of $\omega_{n0}$. Carricato (2007) uses a simple example to prove that, if the bearing block of n is moved arbitrarily (i.e. $\omega_{n-1,0}$ changes in a generic way), *none* of these quantities is generally equal to $|\omega_{\underline{m}0}|$.

In particular, for the purposes of this study, it is important to show that $|\omega_{\underline{m}0}| = |\omega_{n,n-1}|$ if and only if $\omega_{n-1,0}$ lies on $\Sigma_{\underline{mn}}$ (since all links spherically move about $O$, it is convenient, for the sake of conciseness, to represent twists simply by way of the corresponding angular-velocity vectors applied in $O$). This may be accomplished by considering that two vectors parallel to $a_{\underline{m}}$ and $a_n$ (and directed as $\$_{\underline{m}0}$ and $\$_{n,n-1}$ in Fig. 3) have equal magnitude if and only if their difference lies on the bisecting plane $\Sigma_{\underline{mn}}$. Hence, by recalling that $\omega_{n\underline{m}}$ is constrained to lie on $\Sigma_{\underline{mn}}$ and that $\omega_{n0} = \omega_{n\underline{m}} + \omega_{\underline{m}0} = \omega_{n,n-1} + \omega_{n-1,0}$,

$$(11) \qquad \left|\omega_{\underline{m}0}\right| = \left|\omega_{n,n-1}\right| \Leftrightarrow \left(\omega_{\underline{m}0} - \omega_{n,n-1}\right) \in \Sigma_{\underline{mn}} \Leftrightarrow \left(\omega_{n\underline{m}} + \omega_{\underline{m}0} - \omega_{n,n-1}\right) = \omega_{n-1,0} \in \Sigma_{\underline{mn}}.$$

To the author's knowledge, the result expressed in Eq. 10 is presented here for the first time. Equation (11) provides a more general result than that deducible from Porat's study. Indeed, Porat (1980) examines a CV transmission that may be shown to be equivalent to a special arrangement of that portrayed in Fig. 3, with $a_1$ and $a_2$ being respectively set collinear with $a_{\underline{3}}$ and perpendicular to the plane determined by $a_{\underline{3}}$ and $a_3$. Porat provides an expression of $\omega_{30}$ as a function of $\dot{q}_3$, $\dot{\varphi}_1$, and $\dot{\varphi}_2$, by which the reader may verify that $\dot{q}_3 = \dot{\varphi}_3$ if and only if $\dot{\varphi}_1 = 0$, i.e. if $\omega_{20}$ is parallel to $a_2$ and thus perpendicular to the plane of the shaft axes. Indeed, this is the only configuration that locates $\omega_{20}$ on the bisecting

plane, given the particular location of $a_1$ and $a_2$. Equation (11) proves that, in a more general case, having $\omega_{20}$ orthogonal to $a_3$ and $a_3$ is not a necessary condition for homokinetic transmission (though it is a sufficient one).

From these considerations, it emerges that a transmission such as that in Fig. 3, which is equivalent to that used by Gogu (2007), is *not* able, in general, to transmit homokinetic motion in the form and for the purposes described in the previous sections (as a matter of fact, Fig. 3 represents the actuation, by means of the kinematic chain $M_m F_{mn} \equiv M_3 F_{33}$, of the third revolute pair of the serial wrist $R_1 R_2 R_3$). The above arguments immediately extend to the double-CV-joint transmission used by Gogu (2006) to remotely actuate the revolute pairs of a serial wrist mounted on a translating platform. Further details for this case may be found in Carricato (2007), whereas a detailed derivation of the angular velocities of all members comprised in the transmission once the input motor is kept locked is given by Matschinsky (2000).

<u>Novel two- and three-dof wrists with decoupled and homokinetic remote actuation</u>

The arguments presented in the previous sections shows that the homokinetic actuation of the of the most external rotoidal joint in a serial wrist cannot be obtained with a transmission of the type depicted in Fig. 3. At the same time, the condition to develop feasible solutions have been identified. Figure 5 shows the schematic of a remotely-actuated two-dof wrist. While the Euler angle $\varphi_1$ of the output link is directly actuated by the first joint of the spherical chain $R_1 R_2$ connecting the end-effector to the frame (i.e. $R_1 \equiv M_1$), the Euler angle $\varphi_2$ is controlled via the transmission chain $M_2, F_{22} R_2$, comprising a CV coupling centered in $O$. According to Eq. (11), $\dot{\varphi}_2$, is equal to $\dot{q}_2$ if and only if $\omega_{10}$ lies on the bisecting plane $\Sigma_{22}$. This may be easily accomplished by constructively setting $a_1$ to form equal angles with both $a_2$ and $a_2$. Provided that such a geometric condition is fulfilled and $F_{22}$ preserves its constraint-wrench system throughout the movement,

$$(12) \qquad \dot{\varphi}_1 = \dot{q}_1, \qquad \dot{\varphi}_2 = \dot{q}_2 ,$$

and the actuation is perfectly decoupled and homokinetic.

It is worth remarking that the chain $M_2 M_1 R_2$ (kinematically equivalent to a spherical pair) constitutes an intrinsic centering device for $\underline{2}$ and 2, since it supplies a bundle of forces constraining the two links in $O$. It follows that the CV joint $F_{22}$ may be replaced, as a matter of fact, by a single connecting chain $G_{22}$ providing a force lying on the bisecting plane but not passing through $O$. Any one of the open-chain linkages listed by Hunt (1973) may be chosen to this aim, providing a wide variety of design possibilities.

As CV couplings are components available as commercial units, the solution described here may prove simpler than that proposed by Gogu (2005) and those proposed by Carricato and Parenti-Castelli (2004), Hervé (2006) and Vertechy and Parenti-Castelli, (2006) (this latter group of mechanisms employs linear actuators and the transmission of motion, though decoupled, is not homokinetic). However, if a self-supporting CV coupling is adopted, 'redundant centering' occurs (Seherr-Thoss et al. 2006, p. 159), and the coupling between $\underline{2}$ and 2 is overconstrained. During rotation and under load, the two centerings, unless precisely superimposed, may work against each other, causing considerable internal distortion. Of course, non-overconstrained architectures bear much better misalignments due to tolerances, backlash and wear, but their stiffness is intrinsically inferior, as they cannot take advantage of torque repartition on multiple connecting chains. This may make it particularly difficult, in some cases, to guarantee an acceptable kinetostatic behavior of the coupling throughout the movement, especially when the wrench responsible for the transmission of the load approach $O$ (Hunt, 1973).

A potential advantage resulting from the single-connecting-chain solution is that it does not completely enclose the space about $O$, which may prove useful if extra transmission chains need to be added to actuate a further freedom of the output member. Indeed, the homokinetic actuation of the most far rotoidal pair from the frame requires a more complex architecture respect to the one previously described.

According to Eq. (11) and referring to Fig. 3, $\dot{\varphi}_3$ is equal to $\dot{q}_3$ if and only if $\omega_{20}$ lies on the bisecting plane $\Sigma_{33}$. However, this condition cannot be accomplished, as it requires $\Sigma_{33}$ to coincide at any instant with the plane $\Gamma_{12}$ containing $a_1$ and $a_2$, whereas, for any given posture of $\Gamma_{12}$, $\Sigma_{33}$ necessarily moves with respect to it following $\varphi_2$ variations.

On the other hand, if an additional link $\hat{3}$ is connected to the member 1 by a revolute pair $\hat{R}_3$ (with axis $a_3^{\hat{}}$ converging in $O$) in such a way that $a_1$ forms equal angles with $a_3$ and $a_3$, and $a_2$ forms equal angles with $a_3$, and $a_3$, then $w_{10}$ and $\omega_{21}$ always lie, respectively, on the homokinetic planes $\Sigma_{33}$ and $\Sigma_{33}$) (see Fig. 6, where, for the sake of clarity, $R_2$'s actuation has been omitted). As a consequence, two concentric CV couplings $F_{3\hat{3}}$ and $F_{\hat{3}3}$ may be used to transmit motion between $\underline{3}$ and 3 and between 3 and 3 respectively, so that ultimately $\dot{q}_3 = \dot{\varphi}_{31} = \dot{\varphi}_3$. In order to overcome obvious interference difficulties, $F_{33}$ and $F_{33}$ may be finally replaced by single connecting chains $G_{3\hat{3}}$ and $G_{\hat{3}3}$.

The complexity of the transmission between $\underline{3}$ and 3 is nonetheless considerable, its connectivity amounting to ten. A significant simplification, which is to be considered a peculiar contribution of the present invention, may, however, be achieved by aligning $a_{\hat{3}}$ with $a_1$. In this case, $\hat{3}$ rotates about a fixed axis at a speed equal to $\dot{q}_1 + \dot{\varphi}_{31}$ and it can receive motion either directly, by an actuator mounted coaxially with $M_1$ on the member 1 ($M_3 = R_3$, Fig. 7), or via an angular-velocity-combiner device (such as a differential mechanism), potentially simpler than a CV coupling.

It may be worth observing that a key factor in many robotic applications is the ability of the end-effector to exhibit ample dexterity. While CV couplings permit continuous rotation of the shafts about their own axes, i.e. of $\underline{m}$ and $n$ about the axes of $M_m$ and $R_n$, they may suffer appreciable restrictions in the excursion of the 'articulation' angle (which is the supplementary of the angle $2\alpha$ in Fig. 2) and thus in the rotation allowed to n about the axis $a_{n-1}$. In ball-in-track couplings, which are among the most commonly employed because of their compactness and sturdiness, the transmission rely on sphere constraint into grooves made on rings fixed to the shafts; the articulation angle is limited by the necessity to maintain these spheres into the grooves. Rzeppa joints allow, in their most recent designs, articulation angles up to about $\pm50°$. Ampler excursions are permitted by linkage couplings, such as Clemens, Hooke and Koenigs joints. The numerous realizations of the first two types allow articulation angles up to $\pm90°$, whereas some patented versions of the latter claim excursions up to $\pm135°$.

To show the feasibility of the proposed architectures, Fig. 8-10 depict some design for two- and three-dof wrist with decoupled and homokinetic remote transmission.

In particular, Figure 8 shows the model of a decoupled and homokinetic two-dof wrist (in yaw-pitch configuration) employing a self-supporting Koenigs joint. Every connecting chain is a *CRC* with the axes of the C pairs parallel the shafts and the R pair orthogonal to the plane define by those axes. The angle between $a_1$ and $a_2$ is acute, originating a compact realization and inhibiting the reach of the in-line position (this configuration must be avoided since the C pairs would be aligned, resulting in uncontrolled rotations and translations for the intermediate members (Hervé, 1986)).

Figure 9a shows a two-dof decoupled and homokinetic wrist employing a single *UU* connecting chain. The *U* pairs are centered in $O_m$ and $O_n$, respectively belonging to $a_{\underline{m}}$ and $a_n$, (Fig. 9b). This chain has a connectivity equal to four rather then five, and it shows peculiar characteristics. Indeed, the resulting constraint two-system comprises two forces, one perpendicular to the bisecting plane and passing through $O_m$ and $O_n$, and the other situated on $\Sigma_{mn}$ across the intersection points (proper or improper) of axes of the rotoidal pairs in the U joints (Fig. 9b). Torque transmission is, of course, devolved to the latter (which is the force $\mathbf{F}_{\underline{mn}}$). If a minimum of three chains is adopted (all sharing the points $O_m$ and $O_n$), the constraint system of a non-plunging joint centered in $O'$ is obtained, with $O'$ being the projection on $\Sigma_{mn}$ of the line $w$ through $O_m$ and $O_{\underline{n}}$. Both $O'$ and $O$ move following the relative displacement of $a_{\underline{m}}$ and $a_n$. The Unitru coupling (Culver 1969) is a classical example of a self-supporting coupling of this kind.

If a single connecting-chain is used, a special centering system needs to be employed, since a ball-and-socket joint in $O$ cannot provide the required constraints. Provided that $\underline{m}$ and $n$ are supported by $M_m$ and $R_n$, a solution consists in connecting the bearing hubs of these joints (respectively fixed to the members 0 and $n$-1) in such a way they may only rotate about a screw $\$_{n-1,0}$ situated on $\Sigma_{mn}$ and passing through $O'$ (Fig. 9b). This may be accomplished, for instance, by means of an external-gearing train or a cross-belt friction drive (Zagatti, 1983, p. 75), in which the wheels (either gears or pulleys) are respectively attached to 0 and $n$-1, have equal pitch surfaces and are connected to an intermediate member i via the pivots $R_{i0}$ and $R_{i,n-1}$, whose axes $a_{i0}$ and $a_{i,n-1}$ pass through $O_{\underline{m}}$ and $O_n$, respectively (Fig. 9c). The resulting constraint system comprises a degenerate regulus of forces, namely the pencil through $O'$ on the plane determined by $a_{\underline{m}}$ and $a_n$, and the pencil through $O$ lying on $\Sigma_{\underline{mn}}$. Once the constraint system of the *UU* connecting-chain is added, the required first special fourth system is obtained, comprising a bundle of forces through $O'$ and a planar field of forces on $\Sigma_{mn}$.

If the above architecture is used to implement a wrist, the problem of actuating $\$_{n-1,0}$ emerges, as $O'$ is now a moving point. However, if $R_{i0}$ is motorized (Fig. 9c), so that $\omega_{i0}=\dot{q}_{n-1}u_{i0}$, it is straightforward to see that $\omega_{n-1,0}=k_{n-1}\dot{q}_{n-1}\mathbf{u}_{n-1}$, where the constant $k_{n-1}$ is twice the cosine of the angle between $a_{i0}$ and $a_{n-1}$.

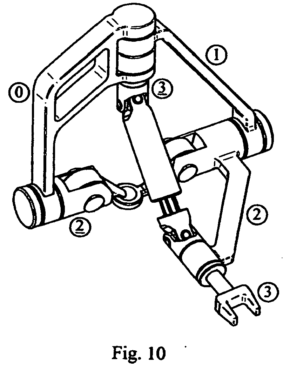

Finally, Figure 10 shows the model of a decoupled and homokinetic three-dof wrist according to the design shown in Fig. 7, with a solution that is considered of peculiar value in the framework of the present invention. A Clemens connecting-chain (*RSR*) actuates the second Euler angle ($\varphi_2$), whereas a Hooke coupling (*UPU*) drives the third one ($\varphi_3$). The angles between $a_1$ and $a_2$ and between $a_2$ and $a_3$ are right angles. In spite of the presence of two connecting chains, the workspace in terms of $\varphi_1$ and $\varphi_2$ is not smaller than a square of side length $\sim\pi/2$, whereas $\varphi_3$ is granted boundless variation.

Conclusions

The above description has addressed the problem of the decoupled and homokinetic transmission of motion between two bodies mutually rotating about a common point. After proving the theoretical impossibility of generating decoupled and configuration-independent relations between the rates of frame-mounted actuators and the components of the output body angular velocity, the feasibility and the practical interest in achieving relations of this sort between the motor speeds and the time-derivatives of the Euler-type angles describing the end-effector orientation have been shown. The problem has been turn into the transmission of rotational movement with constant speed ratio from base-located actuators to the revolute joints of a serial spherical chain.

Novel architectures of decoupled and homokinetic two- and three-dof closed-chain orientational manipulators have been accordingly proposed. They make use of transmission chains based on constant-velocity (CV) couplings. The functioning of these joints has been investigated and the conditions required for homokinetic transmission to be preserved during the simultaneous action of the manipulator motors have been derived and implemented. As CV couplings are commercially available components, the described solutions, particularly those concerning two-dof mechanisms, may prove remarkably simple and effective. Off-the-shelf CV couplings may be replaced by equivalent open-chain linkages, providing a wide variety of design possibilities. Three-dof manipulators, though more complex and less compact than their two-dof counterparts, are still capable of reasonable workspaces. To the Inventor's knowledge, they are the first examples provided in the literature of perfectly decoupled and homokinetic three-dof remotely-actuated (holonomic) wrists. Exemplifying models of the proposed architectures have been provided to illustrate their feasibility.

The three-dof mechanism is the most interesting one for industrial application. Respect to other solution currently available it presents peculiar advantages:

- higher precision and rigidity;
- reduced consumption;
- simpler control;
- higher robustness;
- higher durability, reduced maintenance effort;
- realizable with off-the-shelf couplings;
- higher realization simplicity;

The disadvantages are the reduced compactness and mobility. It follows that the proposed solution results particularly suited for application in which these element are not primary requirement, for example:

- pointing and orientational systems in general;
- telescopes;
- antennas;
- tool posts;
- technological working equipments;
- security systems.

References

[1] Belfiore, N. P. 1993. An atlas of remote actuated bevel gear wrist mechanisms of up to nine links. Int. Journal of Robotics Research, 12(5): 448-59.

[2] Carricato, M. 2005. Fully isotropic four-degrees-of-freedom parallel mechanisms for Schoenflies motion. Int. Journal of Robotics Research, 24(5): 397-414.

[3] Carricato, M. 2007. Homokinetic transmission of rotational motion via constant-velocity joints in closed-chain wrists. 12th World Congress in Mechanism and Machine Science, Besançon, France, pp. 284-290.

[4] Carricato, M. e Parenti-Castelli, V. 2002. Singularity-free fully-isotropic translational parallel mechanisms. Int. Journal of Robotics Research, 21(2): 161-174.

[5] Carricato, M. e Parenti-Castelli, V. 2004a. A novel fully decoupled two-degrees-of-freedom parallel wrist. Int. Journal of Robotics Research, 23(6): 661-667.

[6] Carricato, M. e Parenti-Castelli, V. 2004b. On the topological and geometrical synthesis and classification of translational parallel mechanisms. 11th World Congress in Mechanism and Machine Science, Tianjin, China, pp. 1624-1628.

[7] Clemens, M. 1869. Improvement in apparatus for transmitting rotary motion. United States patent no. 96395.

[8] Culver, I. H. 1969. Constant velocity universal joint. United States patent no. 3477249.

[9] Dudotă, F. 1974. *Cuplaje mobile homocinetice* (in Romanian), Editura Tehnică, Bucharest.

[10] Dunlop, G. R. e Jones, T. P. 1997. Position Analysis of a 3-dof parallel manipulator. Mechanism and Machine Theory, 32(8): 903-920.

[11] Gogu, G. 2005. Fully-isotropic over-constrained parallel wrists with two degrees of freedom. 2005 IEEE Int. Conf. on Robotics and Automation, Barcelona, Spain, pp. 4025-4030.

[12] Gogu, G. 2006. Fully-isotropic hexapods. *Advances in Robot Kinematics,* eds. J. Lenarčič and B. Roth, Springer, Dordrecht, pp. 323-330.

[13] Gogu, G. 2007. Fully-isotropic three-degree-of-freedom parallel wrists. 2007 IEEE Int. Conf. on Robotics and Automation, Roma, Italy, pp. 895-900.

[14] Gosselin, C. M. e Angeles, J. 1990. Singularity analysis of closed-loop kinematic chains. IEEE Transactions on Robotics and Automation, 6(3): 281-290.

[15] Gosselin, C. M. e St-Pierre, É. 1997. Development and experimentation of a fast 3-DOF camera-orienting device. Int. Journal of Robotics Research, 16(5): 619-630.

[16] Herchenbach, P. 1981. Homokinetic double joint for wide bending angles. United States patent no. 4257243.

[17] Hervé, J. M. 1986. Le joint de Koenigs, ses variantes, son application possible en robotique. Entraînements & systèmes, 19(6): 4-6.

[18] Hervé, J. M. 2006. Uncoupled actuation of pan-tilt wrists. IEEE Transactions on Robotics, 22(1): 56-64.

[19] Hunt, K. H. 1973. Constant-velocity shaft couplings: a general theory. Journal of Engineering for Industry, 95B (2): 455-464.

[20] Hunt, K. H. 1978. Kinematic geometry of mechanisms, Clarendon Press, Oxford, pp. 389-402.

[21] Innocenti, C. e Parenti-Castelli, V. 1993. Echelon form solution of direct kinematics for the general fully-parallel spherical wrist. Mechanism and Machine Theory, 28(4): 553-561.

[22] Kong, X. e Gosselin, C. M. 2002. Type synthesis of linear translational parallel manipulators. *Advances in Robot Kinematics,* eds. J. Lenarčič and F. Thomas, Kluwer Academic Publishers, Dordrecht, pp. 453-462.

[23] Kong, X. e Gosselin, C. M. 2003. Type synthesis of input-output decoupled parallel manipulators. 2003 CCToMM Symposium on Mechanisms, Machines, and Mechatronics, Saint-Hubert (Montréal), Québec, Canada, pp. 1-14.

[24] Kong, X. e Gosselin, C. M. 2004. Type synthesis of three-degree-of-freedom spherical parallel manipulators. Int. Journal of Robotics Research, 23(3): 237-245.

[25] Kong, X. e Gosselin, C. M. 2005. Type synthesis of 3-dof PPR-equivalent parallel manipulators based on screw theory and the concept of virtual chain. ASME Journal of Mechanical Design, 127(6): 1113-1121.

[26] Matschinsky, W. 2000. Road vehicle suspensions. Professional Engineering Publishing, London, pp. 42-50.

[27] Merlet, J.-P. 2006. Parallel robots, Springer, Dordrecht, pp. 153-155.

[28] Milenkovic, V. 1990. Non-singular industrial robot wrist. United States patent no. 4907937.

[29] Paganelli, D. 2007. The problem of the homokinetic transmission of rotational motion. Appendix to Carricato (2007).

[30] Porat, I. 1980. Moment transmission by a universal joint. Mechanism and Machine Theory, 15(4): 245-254.

[31] Robinson, J. D., Holland, J. B., Hayes, M. J. D. e Langlois, R. G. 2005. Velocity-level kinematics of the Atlas spherical orienting device using omni-wheels. CSME Transactions, 29(4): 691-700.

[32] Rosheim, M. E. 1989. Robot wrist actuators, John Wiley & Sons, New York.

[33] Rzeppa, A. H. 1953. Universal joint drives. Machine Design, 25(4): 162-170.

[34] Seherr-Thoss, H. C., Schmelz, F. e Aucktor, E. 2006. Universal joints and driveshafts: analysis, design, applications, Springer-Verlag, Berlin.

[35] Sone, K., Isobe, H. e Yamada, K. 2004. High angle active link. NTN Technical Review, 71: 70-73.

[36] Tischler, C. R., Hunt, K. H. e Samuel, A. E. 1998. On optimizing the kinematic geometry of a dextrous robot finger. Int. Journal of Robotics Research, 17(10): 1055-1067.

[37] Tsai L.-W. 1988. The kinematics of spatial robotic bevel-gear trains. IEEE Journal of Robotics and Automation, 4(2): 150-156.

[38] Tsai L.-W. 1999. Robot analysis: the mechanics of serial and parallel manipulators, John Wiley & Sons, New York, pp. 298-332.

[39] Vertechy, R., e Parenti-Castelli, V. 2006. Synthesis of 2-dof spherical fully parallel mechanisms. *Advances in Robot Kinematics,* eds. J. Lenarčič and B. Roth, Springer, Dordrecht, pp. 385-394.

[40] Vischer, P. e Clavel, R. 2000. Argos: a novel 3-dof parallel wrist mechanism. Int. Journal of Robotics Research, 19(1): 5-11.

[41] Wittenburg, J. 1977. Dynamics of systems of rigid bodies, B. G. Teubner, Stuttgart, pp. 19-32.

[42] Zagatti, E. 1983. Giunti: criteri di scelta e proporzionamento (in Italian), Tecniche Nuove, Milano, pp. 39-188.

[43] Zlatanov, D., Fenton, R. G. e Benhabib, B. 1995. A unifying framework for classification and interpretation of mechanism singularities. ASME Journal of Mechanical Design, 117(4): 566-572.

[44] Zlatanov, D. e Gosselin, C. M. 2004. On the kinematic geometry of 3-RER parallel mechanisms. 11th World Congress in Mechanism and Machine Science, Tianjin, China, pp. 226-230.

The preferred embodiments have been above described and some modifications of this invention have been suggested, but it should be understood that those skilled in the art can make variations and changes, without so departing from the related scope of protection, as defined by the following claims.

**Claims**

1. Closed-chain rotational mechanism having decoupled and homokinetic actuation of the motion of a body that rotates in space with three degrees of freedom around a fixed point ($O$), the rotational mechanism comprising a frame (0) and:

   - a rotational motor ($M_1$), whose rotor has an axis ($a_1$) fixed to the frame (0); such a motor actuates a revolute pair ($R_1$) and controls the rotational motion of a member (1) around an axis ($a_1 \equiv a_1$);
   - a rotational motor ($M_2$), whose rotor has an axis ($a_2$) fixed to the frame (0); such a motor generates the rotational motion of a member ($\underline{2}$) around the axis ($a_2$) and, by means of a connecting chain interposed between the member ($\underline{2}$) and a member (2), actuates a revolute pair ($R_2$) of the axis ($a_2$), therefore controlling the rotational motion of the member 2 around the axis ($a_2$);
   - a rotational motor ($M_3$), whose rotor has an axis ($a_3$) fixed to the frame (0); such a motor generates the rotational motion of a member ($\underline{3}$) around the axis ($a_3$) and, by means of a suitable connecting chain interposed between the member ($\underline{3}$)and a member (3), actuates a revolute pair ($R_3$) of the axis ($a_3$) controlling in such a way the rotational motion of the member (3) around the axis ($a_3$);
   - a rigid connection between said revolute pairs ($R_1$ and $R_2$) constituting the membe (1);
   - a rigid connection between said revolute pairs ($R_2$ and $R_3$) constituting the member (2);
   and being such that:
   - the axis of the motors ($M_1$, $M_2$ and $M_3$), and the axis of the revolute pairs ($R_1$, $R_2$ and $R_3$) are all concurrent in the same fixed point ($O$);
   - there are connecting chains ($G_{22}$ and $G_{33}$), each having connectivity equal to five, for the motion transmission respectively between the members ($\underline{2}$ and 2) and the members (3 and 3), and placed around the fixed point ($O$)so as to avoid any mutual mechanical interference, and such that the kinematic pairs implementing the kinematic screws $\$^j_{mn}$ ($j$=1,2,3,4,5) of ($G_{mn}$), with $\underline{mn} = \underline{22}$ and $\underline{33}$, fulfil the condition of bilateral symmetry with respect to ($\Sigma_{mn}$), with $\underline{mn} = 22$ and $\underline{33}$, where ($\Sigma_{mn}$) is the bisecting plane of the chain ($G_{mn}$), i.e. the plane with respect to which the axis ($a_m$) with $\underline{m} = \underline{2}$ and $\underline{3}$, and $a_n$, with n = 2 and 3, are bilaterally symmetrical;
   - the motor ($M_3$) is mounted coaxially to the motor ($M_1$), i.e. the axis ($a_3$) coincides with the axis ($a_1$ and $a_1$);
   - the angle between the axis ($a_1$ and $a_2$), the angle between the axis ($a_1$) and ($a_2$), and the angle between the axis ($a_2$) and ($a_3$) have all an identical value;

   the closed-chain rotational mechanism being **characterised in that:**
   the stator of the motor ($M_3$) is mounted on the member (1).

2. Mechanism according to claim 1, **characterised in that** said connecting chains ($G_{22}$) and ($G_{33}$) are *RER* or *RSR* chains, even different with respect to each other, where *R* is a revolute pair, *S* a spherical pair or a set of a kinematic pairs equivalent to it and *E* is a planar pair or a set of a kinematic pairs equivalent to it.

3. Mechanism according to claim 2, **characterised in that** *CRC* chain is used, this being a particular case of the *RER* chain and wherein the cylindrical pairs C are parallel to the axes $a_m$ and $a_n$, with ($\underline{m}$, $n$) = ($\underline{2}$, 2) or ($\underline{3}$, 3), and the revolute pair R is perpendicular to them.

4. Mechanism according to claim 2, **characterised in that** a chain *UPU* is used, this being a particular case of chain *RER* and wherein the most external axes of the universal pairs *U* are bilaterally symmetrical with respect to $\Sigma_{mn}$, and the most internal axes are parallel to $\Sigma_{mn}$, and the intermediate prismatic pair P is perpendicular to the internal axes of the universal pairs.

5. Mechanism according to claim 2 and 4, **characterised in that**:

   - the connecting chain $\underline{2}$ -2 is constituted by a Clemens joint, this being a particular case of the chain *RSR*;
   - the connecting chain $\underline{3}$ -3 is constituted by a double Cardan joint, this being a particular case of the chain *UPU*.

**Patentansprüche**

1. Drehmechanismus mit einer geschlossenen Kette mit einer entkoppelten und homokinetischen Betätigung der Bewegung eines Körpers, der im Raum mit drei Freiheitsgraden um einen festen Punkt ($O$) rotiert, wobei der Drehmechanismus einen Rahmen (0) aufweist und:

- einen Rotationsmotor ($M_1$), dessen Rotor eine Achse ($a_1$) aufweist, die an dem Rahmen (0) befestigt ist, wobei ein solcher Motor ein Drehpaar ($R_1$) antreibt und die Dreh-bewegung eines Teils (1) um eine Achse ($a_1 \equiv a_1$) steuert;

- einen Rotationsmotor ($M_2$), dessen Rotor eine Achse ($a_2$) aufweist, die an dem Rahmen (0) befestigt ist, wobei ein solcher Motor die Drehbewegung eines Teils ($\underline{2}$) um die Achse ($a_2$) erzeugt und mittels einer zwischen das Teil ($\underline{2}$) und ein Teil (2) geschalteten Verbindungskette ein Drehpaar ($R_2$) der Achse ($a_2$) antreibt und deshalb die Drehbewegung des Teils 2 um die Achse ($a_2$) steuert;

- einen Rotationsmotor ($M_3$), dessen Rotor eine Achse ($a_3$) aufweist, die an dem Rahmen (0) befestigt ist, wobei ein solcher Motor die Drehbewegung eines Teils ($\underline{3}$) um die Achse ($a_3$) erzeugt und mittels einer zwischen das Teil ($\underline{3}$) und ein Teil (3) geschalteten geeigneten Verbindungskette ein Drehpaar ($R_3$) der Achse ($a_3$) antreibt und auf diese Weise die Drehbewegung des Teils (3) um die Achse ($a_3$) steuert;

- eine feste Verbindung zwischen den Drehpaaren ($R_1$ und $R_2$), die das Teil (1) bildet;

- eine feste Verbindung zwischen den Drehpaaren ($R_2$ und $R_3$), die das Teil (2) bildet;

und die so ist, dass

- die Achse der Motoren ($M_1$, $M_2$ und $M_3$) und die Achse der Drehpaare ($R_1$, $R_2$ und $R_3$) alle in demselben festen Punkt ($O$) übereinstimmen;

- es Verbindungsketten ($G_{\underline{22}}$ und $G_{\underline{33}}$) gibt, die jeweils eine Verbundenheit gleich fünf haben zur Bewegungsübertragung bzw. zwischen den Teilen ($\underline{2}$ und 2) und den Teilen ($\underline{3}$ und 3) und die um den ersten Punkt (O) angeordnet sind, um irgendwelche gegenseitigen mechanischen Störungen zu vermeiden, und so dass die kinematischen Paare, welche die kinematischen Schrauben $\$^j_{\underline{mn}}$ (j = 1,2,3,4,5) von ($G_{\underline{mn}}$) implementieren mit mn = $\underline{22}$ und $\underline{33}$, die Bedingung einer bilateralen Symmetrie erfüllen in Bezug auf ($\Sigma_{\underline{mn}}$) mit mn = $\underline{22}$ und $\underline{33}$, wobei ($\Sigma_{\underline{mn}}$) die halbierende Ebene der Kette ($G_{\underline{mn}}$) ist, d.h. die Ebene in Bezug auf die die Achse ($a_{\underline{m}}$) mit $\underline{m}$ = $\underline{2}$ und $\underline{3}$ und $a_n$, mit n = 2 und 3 bilaterial symmetrisch sind;

- der Motor ($M_3$) koaxial zu dem Motor ($M_1$) montiert ist, d.h. die Achse ($a_{\underline{3}}$) fällt mit den Achsen ($a_{\underline{1}}$ und $a_1$) zu-sammen;

- der Winkel zwischen den Achsen ($a_1$ und $a_{\underline{2}}$), der Winkel zwischen der Achse ($a_1$) und ($a_2$) und der Winkel zwischen den Achsen ($a_2$) und ($a_3$) alle einen identischen Wert haben;

wobei der Drehmechanismus mit der geschlossenen Kette **dadurch gekennzeichnet ist, dass**

der Stator des Motors ($M_3$) auf dem Teil (1) montiert ist.

**2.** Mechanismus gemäß Anspruch 1, **dadurch gekennzeichnet, dass** die Verbindungsketten ($G_{\underline{22}}$) und ($G_{\underline{33}}$) *RER* oder *RSR*-Ketten sind, selbst unterschiedlich in Bezug aufeinander, wo-bei *R* ein Drehpaar, *S* ein sphärisches Paar oder ein Satz eines dazu äquivalenten kinematischen Paars und *E* ein planares Paar oder ein Satz von dazu äquivalenten kinematischen Paaren ist.

**3.** Mechanismus gemäß Anspruch 2, **dadurch gekennzeichnet, dass** eine *CRC*-Kette verwendet wird, wobei dies ein besonderer Fall der *RER*-Kette ist und wobei die zylindrischen Paare *C* parallel zu den Achsen $a_{\underline{m}}$ und $a_n$ sind, mit ($\underline{m}$, n) = (2, 2) oder ($\underline{3}$, 3), und das Drehpaar R rechtwinklig zu ihnen ist.

**4.** Mechanismus gemäß Anspruch 2, **dadurch gekennzeichnet, dass** eine Kette *UPU* verwendet wird, wobei es sich um einen Sonderfall der Kette *RER* handelt und wobei die äußersten Achsen der universalen Paare U bilateral symmetrisch sind in Bezug auf $\Sigma_{\underline{mn}}$, und die innersten Achsen parallel zu $\Sigma_{\underline{mn}}$ sind, und dass dazwischen liegende prismatische Paar P rechtwinklig zu den inneren Achsen des universalen Paars ist.

**5.** Mechanismus gemäß Anspruch 2 und 4, **dadurch gekennzeichnet, dass**

- die Verbindungskette $\underline{2}$-2 aus einer Clemens-Verbindung besteht, wobei es sich um einen Sonderfall der Kette *RSR* handelt;

- die Verbindungskette $\underline{3}$-3 aus einem doppelten KardanGelenk besteht, wobei es sich um einen Sonderfall der Kette *UPU* handelt.

**Revendications**

**1.** Mécanisme de rotation en chaîne fermée, comportant un actionnement découplé et homocinétique du mouvement d'un corps qui tourne dans l'espace avec trois degrés de liberté autour d'un point fixe (O), le mécanisme de rotation comprenant un bâti (0) et :

- un moteur de rotation ($M_1$), dont le rotor comporte un axe ($\alpha_{\underline{1}}$) fixé au bâti (0) ; un tel moteur actionnant une paire rotoïde ($R_1$) et commandant le mouvement de rotation d'un élément (1) autour d'un axe ($\alpha_1 \equiv \alpha_{\underline{1}}$);

- un moteur de rotation ($M_2$), dont le rotor comporte un axe ($\alpha_2$) fixé au bâti (0) ; un tel moteur générant le mouvement de rotation d'un élément ($\underline{2}$) autour de l'axe ($\alpha_2$), et, à l'aide d'une chaîne de liaison interposée entre l'élément ($\underline{2}$) et un élément (2), actionnant une paire rotoïde ($R_2$) de l'axe ($\alpha_2$), de façon à commander ainsi le mouvement de rotation de l'élément (2) autour de l'axe ($\alpha_2$);

- un moteur de rotation ($M_3$), dont le rotor comporte un axe ($\alpha_3$) fixé au bâti (0) ; un tel moteur générant le mouvement de rotation d'un élément ($\underline{3}$) autour de l'axe ($\alpha_3$), et, à l'aide d'une chaîne de liaison appropriée interposée entre l'élément ($\underline{3}$) et un élément (3), actionnant une paire rotoïde ($R_3$) de l'axe ($\alpha_3$), de façon à commander ainsi le mouvement de rotation de l'élément (3) autour de l'axe ($\alpha_3$) ;

- une liaison rigide entre lesdites paires rotoïdes ($R_1$ et $R_2$) constituant l'élément (1) ;

- une liaison rigide entre lesdites paires rotoïdes ($R_2$ et $R_3$) constituant l'élément (2) ;

et qui est tel que :

- l'axe des moteurs ($M_1$, $M_2$ et $M_3$), et l'axe des paires rotoïdes ($R_1$, $R_2$ et $R_3$) se rencontrent tous dans le même point fixe (O) ;

- il y a des chaînes de liaison ($G_{\underline{22}}$ et $G_{\underline{33}}$), ayant chacune une connectivité égale à cinq, pour la transmission du mouvement, respectivement, entre les éléments ($\underline{2}$ et 2) et les éléments ($\underline{3}$ et 3), et disposées autour du point fixe (O) de façon à éviter toute interférence mécanique mutuelle, et de telle sorte que les paires cinématiques constituant les vis cinématiques $\$\underline{i}_{\underline{mn}}$ (j = 1, 2, 3, 4, 5) de ($G_{\underline{mn}}$), avec $\underline{mn} = \underline{22}$ et $\underline{33}$, satisfassent à la condition de symétrie bilatérale par rapport à ($\Sigma_{\underline{mn}}$), avec $\underline{mn} = \underline{22}$ et $\underline{33}$, où ($\Sigma_{\underline{mn}}$) est le plan de bissection de la chaîne ($G_{\underline{mn}}$), ou, autrement dit, le plan par rapport auquel les axes ($\alpha_{\underline{m}}$), avec $\underline{m} = \underline{2}$ et $\underline{3}$, et $\alpha_n$, avec n = 2 et 3, présentent une symétrie bilatérale ;

- le moteur ($M_3$) est monté de façon coaxiale par rapport au moteur ($M_1$), à savoir que l'axe ($\alpha_{\underline{3}}$) coïncide avec l'axe ($\alpha_1$ et $\alpha_{\underline{1}}$);

- l'angle entre l'axe ($\alpha_1$ et $\alpha_{\underline{2}}$), l'angle entre l'axe ($\alpha_1$) et ($\alpha_2$), et l'angle entre l'axe ($\alpha_2$) et ($\alpha_{\underline{3}}$), ont tous une valeur identique ;

le mécanisme de rotation en chaîne fermée étant **caractérisé :**

**en ce que** le stator du moteur ($M_3$) est monté sur l'élément (1).

**2.** Mécanisme selon la revendication 1, **caractérisé en ce que** lesdites chaînes de liaison ($G_{\underline{22}}$) et ($G_{\underline{33}}$) sont des chaînes *RER* ou *RSR*, même différentes entre elles, R étant une paire rotoïde, *S* étant une paire sphérique ou un jeu de paires cinématiques équivalant à celle-ci, et *E* étant une paire plane ou un jeu de paires cinématiques équivalant à celle-ci.

**3.** Mécanisme selon la revendication 2, **caractérisé en ce qu'**une chaîne *CRC* est utilisée, celle-ci étant un cas particulier de chaîne *RER,* et dans lequel les paires cylindriques *C* sont parallèles aux axes $\alpha_{\underline{m}}$ et $\alpha_n$, avec ($\underline{m}$, n) = ($\underline{2}$, 2) ou ($\underline{3}$, 3), et la paire rotoïde R leur étant perpendiculaire.

**4.** Mécanisme selon la revendication 2, **caractérisé en ce qu'**une chaîne *UPU* est utilisée, celle-ci étant un cas particulier de chaîne *RER,* et dans lequel les axes les plus extérieurs des paires universelles *U* présentent une symétrie bilatérale par rapport à $\Sigma_{\underline{mn}}$, et les axes les plus intérieurs sont parallèles à $\Sigma_{\underline{mn}}$, et la paire prismatique intermédiaire P est perpendiculaire aux axes intérieurs des paires universelles.

**5.** Mécanisme selon la revendication 2 et 4, **caractérisé en ce que** :

- la chaîne de liaison $\underline{2}$-2 est constituée par un joint de Clemens, celui-ci étant un cas particulier de la chaîne *RSR* ;
- la chaîne de liaison $\underline{3}$-3 est constituée par un double joint de cardan, celui-ci étant un cas particulier de la chaîne *UPU*.

Fig. 1

Fig. 2

Fig. 3

Fig. 4

Fig. 5

Fig. 6

Fig. 7

Fig. 8

(a)

(b)

(c)

Fig. 9

Fig. 10

## REFERENCES CITED IN THE DESCRIPTION

### Patent documents cited in the description

- US 96395 A
- US 3477249 A
- US 4257243 A
- US 4907937 A

### Non-patent literature cited in the description

- An atlas of remote actuated bevel gear wrist mechanisms of up to nine links. **BELFIORE, N. P.** Int. Journal of Robotics Research. 1993, vol. 12, 448-59
- **CARRICATO, M.** Fully isotropic four-degrees-of-freedom parallel mechanisms for Schoenflies motion. *Int. Journal of Robotics Research,* 2005, vol. 24 (5), 397-414
- **CARRICATO, M.** Homokinetic transmission of rotational motion via constant-velocity joints in closed-chain wrists. *12th World Congress in Mechanism and Machine Science, Besançon, France,* 2007, 284-290
- **CARRICATO, M ; PARENTI-CASTELLI, V.** Singularity-free fully-isotropic translational parallel mechanisms. *Int. Journal of Robotics Research,* 2002, vol. 21 (2), 161-174
- **CARRICATO, M. ; PARENTI-CASTELLI, V.** A novel fully decoupled two-degrees-of-freedom parallel wrist. *Int. Journal of Robotics Research,* 2004, vol. 23 (6), 661-667
- **CARRICATO, M. ; PARENTI-CASTELLI, V.** On the topological and geometrical synthesis and classification of translational parallel mechanisms. *11th World Congress in Mechanism and Machine Science,* 2004, 1624-1628
- **DUNLOP, G. R. ; JONES, T. P.** Position Analysis of a 3-dof parallel manipulator. *Mechanism and Machine Theory,* 1997, vol. 32 (8), 903-920
- **GOGU, G.** Fully-isotropic over-constrained parallel wrists with two degrees of freedom. *2005 IEEE Int. Conf. on Robotics and Automation,* 2005, 4025-4030
- **GOGU, G.** Fully-isotropic three-degree-of-freedom parallel wrists. *IEEE Int. Conf. on Robotics and Automation,* 2007, 895-900
- **GOSSELIN, C. M. ; ANGELES, J.** Singularity analysis of closed-loop kinematic chains. *IEEE Transactions on Robotics and Automation,* vol. 6 (3), 281-290
- **GOSSELIN, C. M. ; ST-PIERRE, É.** Development and experimentation of a fast 3-DOF camera-orienting device. *Int. Journal of Robotics Research,* 1997, vol. 16 (5), 619-630
- **HERVÉ, J. M.** Le joint de Koenigs, ses variantes, son application possible en robotique. *Entraînements & systèmes,* 1986, vol. 19 (6), 4-6
- **HERVÉ, J. M.** Uncoupled actuation of pan-tilt wrists. *IEEE Transactions on Robotics,* 2006, vol. 22 (1), 56-64
- **HUNT, K. H.** Constant-velocity shaft couplings: a general theory. *Journal of Engineering for Industry,* 1973, vol. 95B (2), 455-464
- **HUNT, K. H.** Kinematic geometry of mechanisms. Clarendon Press, 1978, 389-402
- **INNOCENTI, C. ; PARENTI-CASTELLI, V.** Echelon form solution of direct kinematics for the general fully-parallel spherical wrist. *Mechanism and Machine Theory,* 1993, vol. 28 (4), 553-561
- **KONG, X. ; GOSSELIN, C. M.** Type synthesis of input-output decoupled parallel manipulators. *2003 CCToMM Symposium on Mechanisms, Machines, and Mechatronics,* 2003, 1-14
- **KONG, X. ; GOSSELIN, C. M.** Type synthesis of three-degree-of-freedom spherical parallel manipulators. *Int. Journal of Robotics Research,* 2004, vol. 23 (3), 237-245
- **KONG, X. ; GOSSELIN, C. M.** Type synthesis of 3-dof PPR-equivalent parallel manipulators based on screw theory and the concept of virtual chain. *ASME Journal of Mechanical Design,* 2005, vol. 127 (6), 1113-1121
- **MATSCHINSKY, W.** Road vehicle suspensions. Professional Engineering Publishing, 2000, 42-50
- **MERLET, J.-P.** Parallel robots. Springer, 2006, 153-155
- **PAGANELLI, D.** The problem of the homokinetic transmission of rotational motion. *Appendix to Carricato,* 2007
- **PORAT, I.** Moment transmission by a universal joint. *Mechanism and Machine Theory,* 1980, vol. 15 (4), 245-254

- **ROBINSON, J. D. ; HOLLAND, J. B. ; HAYES, M. J. D. ; LANGLOIS, R. G.** Velocity-level kinematics of the Atlas spherical orienting device using omni-wheels. *CSME Transactions,* 2005, vol. 29 (4), 691-700
- **ROSHEIM, M. E.** Robot wrist actuators. John Wiley & Sons, 1989
- **RZEPPA, A. H.** Universal joint drives. *Machine Design,* 1953, vol. 25 (4), 162-170
- **SEHERR-THOSS, H. C. ; SCHMELZ, F. ; AUCKTOR, E.** Universal joints and driveshafts: analysis, design, applications. Springer-Verlag, 2006
- **SONE, K. ; ISOBE, H. ; YAMADA, K.** High angle active link. *NTN Technical Review,* 2004, vol. 71, 70-73
- **TISCHLER, C. R. ; HUNT, K. H. ; SAMUEL, A. E.** On optimizing the kinematic geometry of a dextrous robot finger. *Int. Journal of Robotics Research,* 1998, vol. 17 (10), 1055-1067
- **TSAI L.-W.** The kinematics of spatial robotic bevel-gear trains. *IEEE Journal of Robotics and Automation,* 1988, vol. 4 (2), 150-156
- **TSAI L.-W.** Robot analysis: the mechanics of serial and parallel manipulators. John Wiley & Sons, 1999, 298-332
- **VISCHER, P. ; CLAVEL, R.** Argos: a novel 3-dof parallel wrist mechanism. *Int. Journal of Robotics Research,* 2000, vol. 19 (1), 5-11
- **WITTENBURG, J.** Dynamics of systems of rigid bodies. 1977, 19-32
- **ZAGATTI, E.** Giunti: criteri di scelta e proporzionamento (in Italian. *Tecniche Nuove,* 1983, 39-188
- **ZLATANOV, D. ; FENTON, R. G ; BENHABIB, B.** A unifying framework for classification and interpretation of mechanism singularities. *ASME Journal of Mechanical Design,* vol. 117 (4), 566-572
- **ZLATANOV, D. ; GOSSELIN, C. M.** On the kinematic geometry of 3-RER parallel mechanisms. *11th World Congress in Mechanism and Machine Science, Tianjin, China,* 2004, 226-230